(19) **Europäisches Patentamt / European Patent Office / Office européen des brevets**

(11) **EP 3 969 128 B1**

(12) **EUROPEAN PATENT SPECIFICATION**

(45) Date of publication and mention
of the grant of the patent:
**24.06.2026 Bulletin 2026/26**

(21) Application number: **20726559.6**

(22) Date of filing: **12.05.2020**

(51) International Patent Classification (IPC):
**A62B 1/10** *(2006.01)*

(52) Cooperative Patent Classification (CPC):
**A62B 1/10**

(86) International application number:
**PCT/IB2020/054485**

(87) International publication number:
**WO 2020/230025 (19.11.2020 Gazette 2020/47)**

(54) **SELF-RETRACTING LIFELINE COMMUNICATIONS SYSTEMS**

KOMMUNIKATIONSSYSTEME FÜR SELBSTEINZIEHENDE RETTUNGSLEINE

SYSTÈMES DE COMMUNICATION DE LIGNE DE SÉCURITÉ À RÉTRACTION AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2019 US 201962848917 P**

(43) Date of publication of application:
**23.03.2022 Bulletin 2022/12**

(73) Proprietor: **3M Innovative Properties Company Saint Paul, Minnesota 55133-3427 (US)**

(72) Inventors:
• **BLACKFORD, Matthew J.**
**Saint Paul, Minnesota 55133-3427 (US)**
• **GARDNER, James P., Jr.**
**Saint Paul, Minnesota 55133-3427 (US)**
• **BRIGHAM, Scott E.**
**Saint Paul, Minnesota 55133-3427 (US)**

(74) Representative: **Mathys & Squire Theatinerstraße 8 80333 München (DE)**

(56) References cited:
WO-A1-2019/030708     WO-A1-2020/031064
US-A1- 2018 107 169

## Description

## Technical Field

The present disclosure relates to improvements in self-retracting lifelines as well as methods using a self-retracting lifeline .

## Background

People working at height, and in particular people whose occupation requires them to work at height, typically use fall protection equipment to mitigate the potential effects of a fall. For example, workers may wear a harness that is attached to a self-retracting lifeline, or SRL, which is in turn attached to a secure attachment point, or anchor point. If a person falls, the SRL stops the payout of the rope or cable connected to the harness, thereby mitigating the effect of the fall.

US 2018/107169 A1 describes a self-retracting lifeline comprising: a first connector configured to be coupled to an anchor; a second connector configured to be coupled to a user of the lifeline; and one or more electronic sensors, the one or more electronic sensors configured to generate usage data that is indicative of an operation of the SRL, in particular wherein the self-retracting lifeline further comprises a communication unit that is configured to wirelessly transmit the data that is indicative of the operation of the SRL to a second device, wherein the communication unit is further configured to receive alert data based on application of the usage data to one or more safety models for predicting a likelihood of an occurrence of a safety event associated with the SRL, and wherein the SRL further comprises an output unit that is configured to generate an output based on the alert data. In addition thereto US 2018/107169 A1 describes that the output unit that may be configured to generate the output based on operation of SRL, such as to generate an output that indicates a status of SRL(e.g. that SRL is operating correctly or needs to be inspected, repaired, or replaced); to generate an output that indicates that SRL is appropriate for the environment in which SRL is located, or to generate an output data that indicates that the environment in which SRL is located is unsafe (e.g., a temperature, particulate level, location or the like is potentially dangerous to a worker using SRL).

It would be useful to provide certain improvements in this area.

## Summary

In one aspect, the present invention provides a self-retracting lifeline (SRL) , according to claim 1, comprising:
a lifeline having a distal end for connection to a user; a sensor adapted to determine a length of the lifeline that is extended from the SRL; a notification device; and a computing device comprising a processor and a memory, the memory including instructions that when executed by the computing device cause the notification device to emit a sensory notification of an intensity that is correlated to the length of lifeline that is extended from the SRL.

In another aspect, a method of using a self-retracting lifeline (SRL) is provided, according to claim 14, the method comprising the steps of: determining a length of lifeline (108) extended from the SRL; and emitting a notification that is proportional to that length.

## Brief Description of the Drawings

Certain features of the present disclosure are described with reference to the appended Figures, in which:

Figure 1 is a perspective view of a self-retracting lifeline (SRL);
Figure 2 is side view of a user connected to an SRL;
Figure 3 is a side view of a user connected to an SRL;
Figure 4 is a side view of a user connected to an SRL;
Figure 5 is a schematic view of the components of a communications module;
Figure 6 is a front view of an SRL positioned at a distance away from a user;
Figures 7 and 8 are front views of an SRL, positioned at a distance away from a user; and

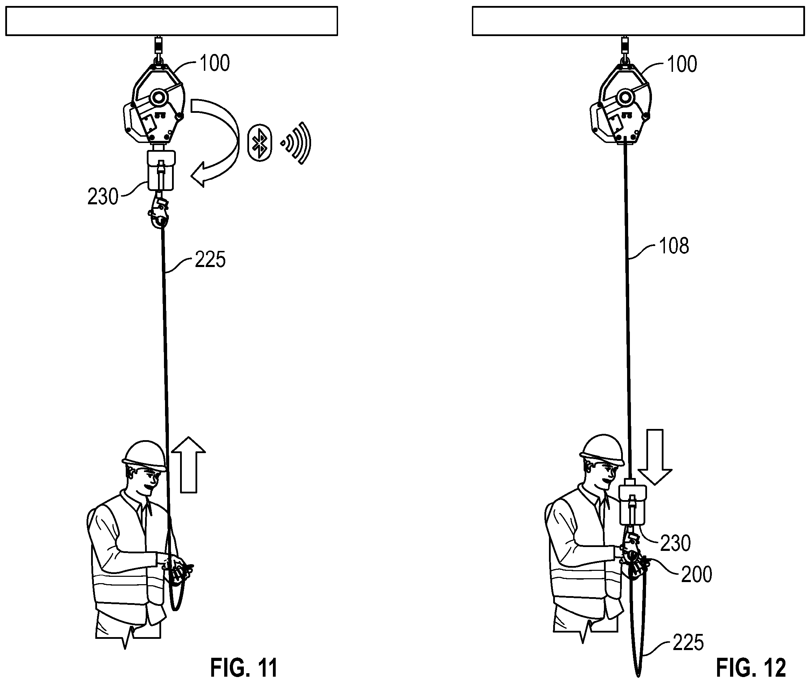

Figure 9, 10, 11, and 12 are front views of an SRL, positioned at a distance away from a user.

## Detailed Description

The following description sets forth certain preferred embodiments, but the description is exemplary and not limiting. Variations of the embodiments disclosed below will be apparent to those of skill in the field.

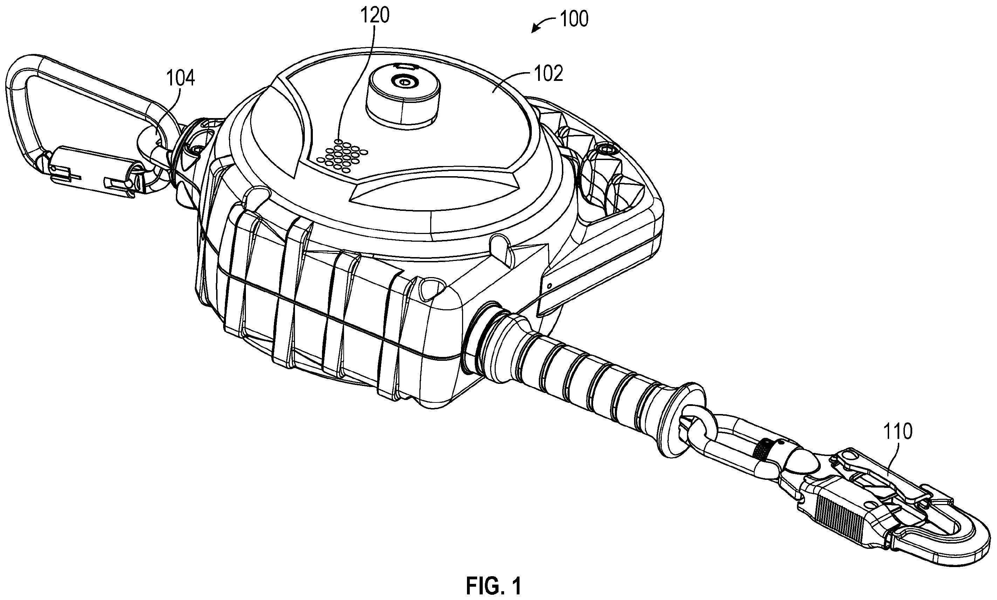

As shown in Figures 1, 2, and 3, an SRL 100 according to the present disclosure preferably includes a housing 102 and an anchorage point 104 that can be attached to a fixed structure 106 such as a building, beam, stanchion or static line, either directly, or by a specialized connector. The housing typically surrounds a frame, to which is attached a drum or hub on which a lifeline 108 is gathered. The lifeline may be cable, a strap, a rope, or any other suitable elongate member. Common SRL lifeline lengths include 50 feet (15.25m), 85 feet (25.9m), 100 feet (30.5m), 130 feet (39.6m), and 175 feet (53.3m). Examples of self-retracting lifelines include those sold under the trade designations "ULTRA-LOK", "NANO-LOK", and "SMART LOCK" by the Fall Protection Business of 3M Company.

One end of the lifeline is typically attached to the drum, and the free end or distal end of the lifeline is adapted to be connected to a harness work by a user using a snap hook 110. The drum is biased by a spring, such that the lifeline tends to be withdrawn into the SRL and gathered on the drum when the force tending to hold or further withdraw the lifeline (typically exerted by the user) is less than the corresponding torque of the spring tending to retract the lifeline. The terms "user" is specifically meant to include an occupational user, or worker. The user is then free to perform activities while the lifeline extends from and retracts into the SRL automatically, which reduces slack in the line and thereby reduces the potential freefall distance for the user.

The drum, frame, and/or housing includes a mechanism, typically including one or more pawls, arranged to halt the withdrawal of the lifeline in the event of a fall event, to minimize the harm to the user that such an event would otherwise cause. For purposes of the current description, reference may be made to the position of a user, such as a user, or to the position of the distal end of a lifeline. Because the user is typically wearing a safety harness, and the distal end of the lifeline is attached to the harness, the two positions are essentially the same for most purposes. However, some small "personal" self-retracting lifelines include a housing carried by a user and distal end connected to an anchor, as is known in the industry.

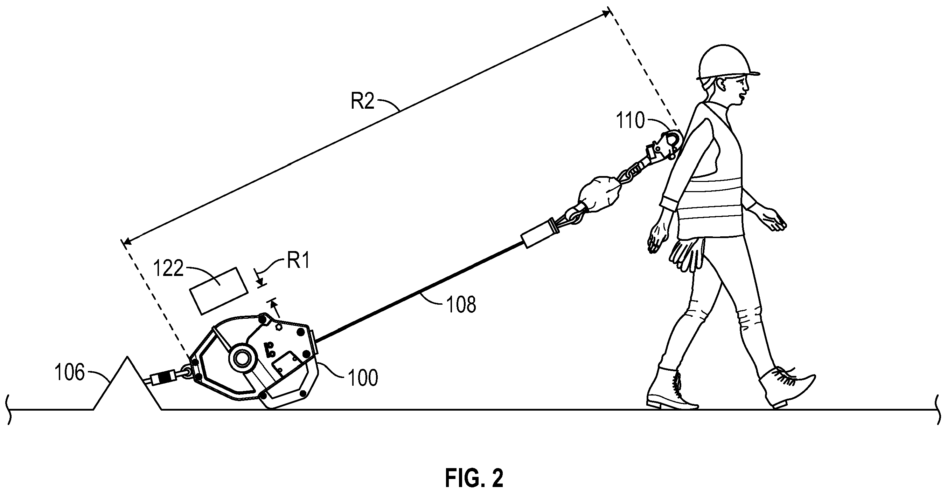

A first feature of the present disclosure relates to an improved ability to notify a user, for example of an unsafe condition. In embodiments of the present disclosure, the SRL includes a notification device 120, such as an audible or haptic or visual notification device. In one embodiment, the device is a loudspeaker. When designing an SRL, one should consider how far away a user might be located when a notification is generated. For example, if using an audible notification, and an 85 dB notification is thought to be adequate to alert a user, and the user is located within 1 meter of the SRL, then the SRL may be configured to generate an 85 dB sound, or series of sounds. If, however, the user is located at a significant distance away from the SRL, then an 85 dB sound generated at the SRL will be significantly less than 85 dB when it reaches the user. Without intending to be bound by any specific technical theory, it is understood that when the sound level $L_{p1}$ is measured at a first distance $R_1$, then the sound level $L_{p2}$ measured at a distance $R_2$ is given by the following equation (and illustrated in Figure 2):

$$L_{p2} = L_{p1} + 20\log_{10}(R_1/R_2)$$

For example, if the sound level $L_{p2}$ at the user at a distance $R_2$ of 15.25 meters (50 feet) is intended to be 85 dB, then the sound measured by sensor 122 at a distance of 1 meter (3.3 feet) from the source should be approximately 109 dB. Self-retracting lifelines are available with lifelines of many different lengths, including one that reaches 61 meters (200 feet), so the approach described herein can be very important in assuring that sounds reach a distant user. The same principles apply to haptic or visual notifications. Any combination of notifications may also be used. Although certain embodiments in the present disclosure are specifically described with reference to audible notifications, the same or similar principles may be applied to haptic or visual notifications.

Because SRLs can be adapted to measure or calculate the length of the lifeline that has been paid out, in embodiments of the present disclosure the intensity of the notification generated by notification device 120 (such as a loudspeaker) is correlated to the distance that the user is away from the SRL that includes or is connected to that device. In embodiments an SRL is provided with a sensor or metering device that can determine how much lifeline has been paid out, optionally a sensor or sensors for determining the direction of and the azimuth angle between the SRL and the user, optionally using the data from the sensor(s) to determine the location of the user (preferably on a continuous basis), optionally comparing that location to a map that represents the work area and is stored in memory associated with the SRL, and then issuing an audible notification or sound prior to or when the user approaches an unsafe condition (which could be based on the map), with the intensity or volume of that sound being correlated to the amount of lifeline that is currently paid out of the SRL. The distance of the distal end of the lifeline may be calculated on a periodic basis, or on a continuous basis.

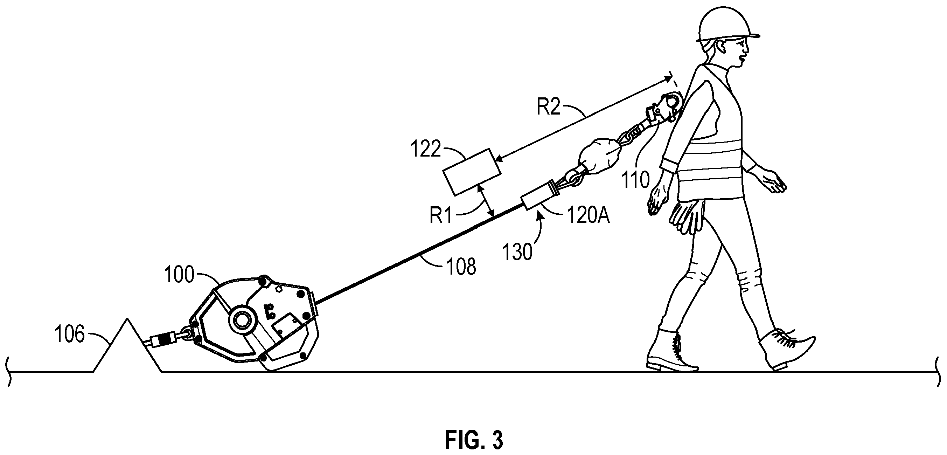

In other embodiments of the present disclosure, a notification arrangement of the type described above could be further improved. In the example described above, although an 85 dB sound may be perceived by a user as loud, but not unpleasant, if another person were standing next to loudspeaker when it emits a 109 dB sound, that person may suffer discomfort or even pain as a result. (A 110 dB sound can be compared to the sound of a jackhammer, or a rock band.) Furthermore, if multiple SRLs are being used in the same area, a loud sound intended to alert one user may be perceived by many nearby users (such as workers on a jobsite), which may cause one or more users to ignore the sounds that are intended to warn them, or to react to sounds not intended to warn them. A solution to these potential problems in some embodiments of the present invention is to relocate the notification device from proximate the SRL housing, to proximate the end of the lifeline that is connected (or connectable) to the user, as shown in Figure 3 at 120A. In Figure 3, the notification device 120A is shown as a part of a bumper 130 or other package positioned near the distal end of the lifeline 108. Again, although the notification device may be one that creates an audible notification, the same or similar principles apply relative to a visual or haptic notification being provided near the distal end of the lifeline. In each of these embodiments, the strength of the sound or haptic or visual notification could be adjusted by the user.

Using the calculation methodology described above relative to an audible notification, if $r_2$ (the distance between the user and the sound source) and $r_1$ (the distance at which the sound from the sound source is measured) are approximately equal, then the sound that the source is required to produce is approximately the same as the sound that is intended for the user to hear - in the example above, 85 dB. This approach then reduces or eliminates the risk of frightening or potentially hurting another user with an unnecessarily loud sound, as well as the risk of broadcasting the sound in a manner that may cause more people than necessary to hear and react to it, or not react to it.

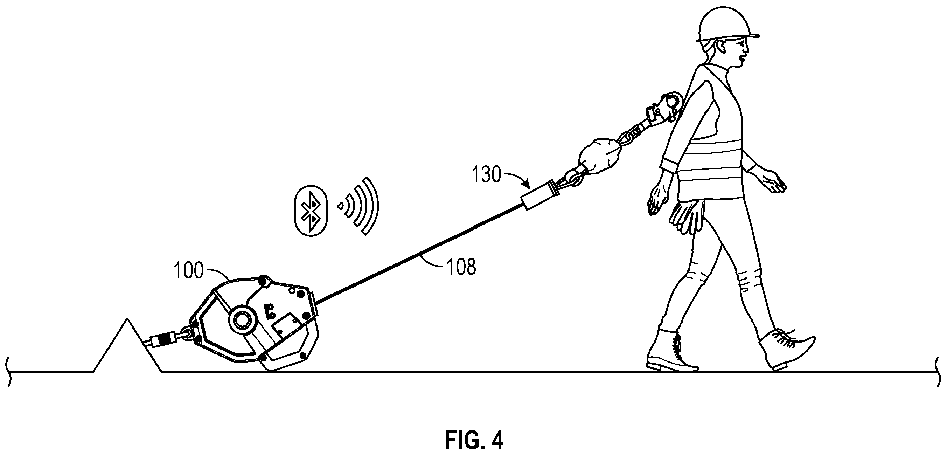

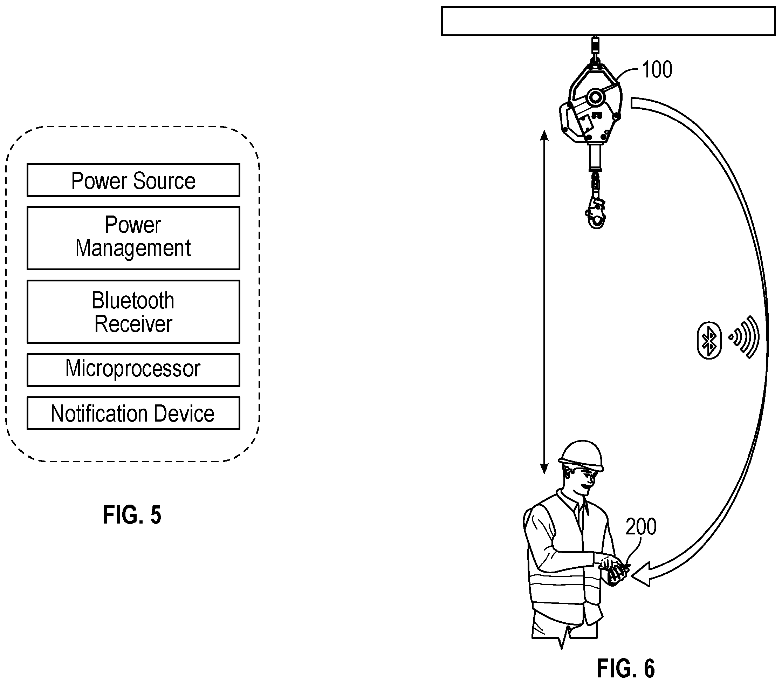

The signal necessary to activate one or more of the audible, haptic, or visual notifications can be transmitted via Bluetooth or other wireless techniques from the SRL to the notification device(s) 120A carried near the end of the lifeline 108, for example in or on a bumper 130 located adjacent a snap hook, as shown in Figure 4. The "bumper module," as illustrated schematically in Figure 5, could include for example a power source, a power management system, a Bluetooth or other wireless receiver (which could also be a transmitter - a transceiver), a microprocessor, and the notification device. It could also include a user interface to enable a user to adjust the notification(s), or other aspects of the system.

Newer SRLs of the type sold by the Fall Protection Business of 3M Company are sometimes said to be "smart" or "connected" because data (including data of the type described above, such as lifeline extension distance, azimuth angle, and the like) can be collected, stored, and processed by the SRL, and transmitted to a base station or mobile device, or in accordance with embodiments of the present disclosure described elsewhere, a bumper module. In some embodiments, this is preferably done via a wireless link, such as Bluetooth, as shown in Figure 6. If the user of the lifeline is also the person carrying a mobile device 200 with which the SRL 100 is expected to communicate, then the signals may not be reliably exchanged at distances beyond 50 to 60 feet (15.25m to 18.3m), based on current technology. For example, if a smart SRL 100 is secured to an anchor point 100 feet above a user, it is possible or even likely that data transmitted between the SRL 100 and the mobile device 200 of a user will not be reliably received. This potential problem is addressed by another feature of the present disclosure.

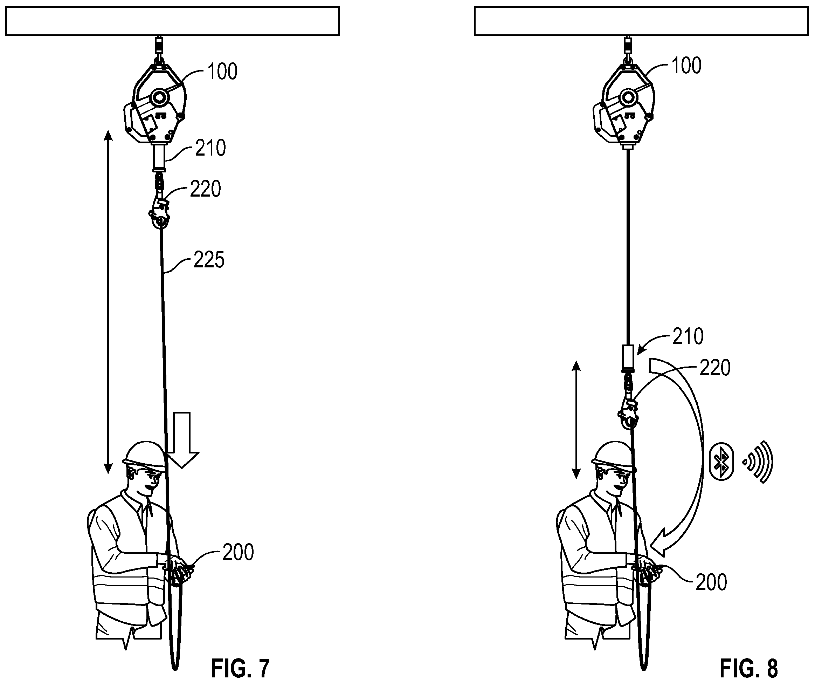

In accordance with some embodiments of the present disclosure, a wireless module 210 is provided at or near the end of the lifeline, for example where a snap hook is positioned, as shown in Figures 7 and 8. In a further embodiment, the wireless module 210 may be provided as, or built into, a snap hook bumper module, as described above. The wireless module could comprise a power source, a power management system, a processor, memory, a notification device, and a wireless radio (such as a Bluetooth transmitter), which may also function as a receiver, as shown schematically in Figure 5. The wireless module 210 (which includes memory) may be thought of as a shuttle, in that when it is within range of the SRL electronic module (including a main memory, typically contained in the SRL housing) as shown in Figure 7, it communicates with that module, and when it is within range of a mobile device such as a mobile phone carried by a user, as shown in Figure 8, it communicates with that device. When the module 210 is within range of both the electronic module of SRL 100 and the mobile device 200, it communicates with both. In one particularly useful embodiment, when the lifeline is retracted, the wireless module can obtain information from or transmit information to the SRL, and when the lifeline is extended, the wireless module can transmit information to or obtain information from the mobile device, and vice versa. It may be that the information obtained from the SRL may be transmitted to the mobile device while the lifeline is in use at another time, and that information obtained by the mobile device while in use be transmitted to the SRL when the lifeline is not in use at another time.

For SRLs that are installed out of reach of a user, it is common industry practice to use a tag line 225 to pull the lifeline and snap hook down to the user. An arrangement of that type is illustrated in Figure 7. In the context of the present disclosure, the tag line 225 could be used to lower a wireless module 210 carried at or near the end of the lifeline toward a user, where the module could exchange information with a mobile device 200, after which the tag line 225 could be used to allow the lifeline to retract into the SRL 100 at a controlled rate. Once the wireless module is within range of the main memory in or near the SRL, it could exchange information with the main memory.

In another embodiment, a lifeline may be equipped with one or more signal repeaters or range extenders, such as a Bluetooth repeater, that receives, amplifies, and re-broadcasts signals so that data can be exchanged between a mobile device and the main memory in or near an SRL. For example, a signal repeater could be placed in one, two, or more places along the length of a lifeline to facilitate the transfer of data when the lifeline is extended. Although this approach may be challenging with a cable lifeline, flexible circuitry (potentially including a power supply) may be integrated into a web style lifeline, because the web may protect any circuitry or cabling, and be rolled up atop itself when the line is retracted.

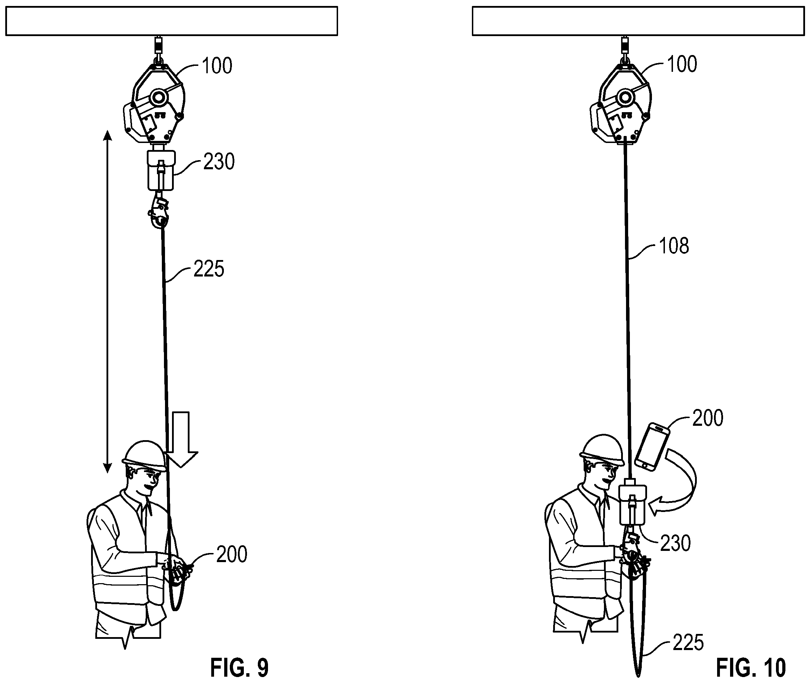

Additional embodiments of the present disclosure also resolve some of the difficulties noted previously in regard to the transfer of data to and from the main memory in or near an SRL from a mobile device carried by a user at a distance from the SRL that exceeds the wireless communications range of the respective devices. One embodiment of the disclosure involves providing a transfer device 230 at or near the end of the lifeline, so that a mobile device may be carried by the transfer device as the lifeline 108 is retracted into the SRL. As shown in Figure 9, a transfer device 230 (shown as a holder, or sheath) may be affixed at or near the end of a lifeline, and the mobile device 200 (shown as a mobile phone) may be inserted into it. When the lifeline retracts into the SRL, the mobile device approaches the SRL and can exchange data with the main memory when the two are within wireless communications range of each other. The lifeline need not be retracted completely by the SRL, because if the wireless communications range of the two devices is approximately 50 feet (15.25 m), then the lifeline need only be retracted until the two devices are less than that distance apart for data to be exchanged effectively. The mobile devices used in connection with the present disclosure, and/or the SRL, may be equipped to emit one or more sounds, visual indications, or other indications when the other is within wireless communications range, so that a user can determine whether to continue to allow the lifeline to retract into the SRL or not. The lifeline can be extended and retracted via a tag line 225, as noted earlier. The mobile device and/or the SRL may instead or in addition be equipped to emit one or more sounds with the other is no longer within wireless communications range, so as also to notify a user of that fact.

The transfer device may be a sort of closeable pocket or sleeve, as shown, and can be permanently or temporarily attached to the lifeline. For example, the transfer device may be a clip-in or clip-on device into which a mobile device can be snapped, or a closeable folder-type device (which may be useful if the mobile device is a tablet computer, for example). The transfer device should be made of materials that to not substantially block wireless signals.

Various aspects of the present disclosure have been described with reference to certain structures, methods, technologies or options, but many alternatives are possible. For example, although Bluetooth wireless communications may be preferred for certain applications, other wireless technologies such as infrared, ultra wideband, Zigbee, induction wireless, or other systems now known .

Another benefit of various aspects of the present disclosure is the reduction or minimization of power necessary to transmit data over long distances.

Mobile devices include mobile phones, laptop or tablet computers, personal digital assistants, or the like, for example.

Self-retracting lifelines as well known in the field, and may include variations such as those equipped with cables, straps, or ropes, or combinations of the foregoing.

Any suitable type of data could be exchanged in either direction between the main memory associated with an SRL, and the memory of a mobile device, and/or wireless module carried by the lifeline, including the amount of lifeline that has been paid out, the date and time, the angle of the SRL relative to one or more reference directions, information about the area in which the SRL and/or a user may be operating (including the location of potential hazards such as edges, openings, or stairwells), information specific to the SRL (such as the date of its manufacture, or the length of the lifeline, or the date of last inspection or repair of the SRL).

Other data, which may be referred to as configuration data, may be transmitted by a mobile device to the SRL, such as software or firmware updates, updated or new parameters related to operation of SRL, identifiers, dates, inspection data, area data, maps, or setting thresholds, for example. Data transmitted by the SRL housing module to the mobile device could include the firmware version, software parameters, identifiers, GPS location, dates, brake condition, brake activation, reserve line deployment, line extension length, line extension speed, line extension acceleration, number of direction changes, number of pawl locks, number of times exceeding thresholds of any of foregoing, number and dates of inspection(s), and number of fall incidents (as detected by the SRL).

## Claims

1. A self-retracting lifeline (SRL) (100) comprising:

   a. a lifeline (108) having a distal end for connection to a user;
   b. a sensor (122) adapted to determine a length of the lifeline that is extended from the SRL;
   c. a notification device (120, 120A); and
   d. a computing device comprising a processor and a memory, the memory including instructions that when executed by the computing device cause the notification device to emit a sensory notification of an intensity that is correlated to the length of lifeline that is extended from the SRL.

2. The SRL (100) of claim 1, wherein the sensory notification is an audible sound.

3. The SRL (100) of claim 1, wherein the sensory notification is haptic or visual.

4. The SRL (100) of claim 1, wherein the notification is of a higher intensity when a longer length of lifeline (108) is extended from the SRL than when a shorter length of lifeline is extended from the SRL.

5. The self-retracting lifeline (100) of claim 1, wherein the SRL further comprises:
   e. a sensor adapted to determine at least one of (i) the direction of a user relative to the SRL and (ii) the azimuth angle between the SRL and the user.

6. The self-retracting lifeline of claim 1 or claim 5, wherein the computing device is adapted to use the data obtained from the sensors (122) to calculate a position of a distal end of the lifeline (108).

7. The SRL (100) of claim 2, wherein the sound is of a higher intensity when a longer length of lifeline (108) is extended from the SRL than when a shorter length of lifeline is extended from the SRL.

8. The SRL (100) of claim 2, wherein the notification device is an audible notification device and the audible notification device is contained within a housing (102) of the SRL.

9. The self-retracting lifeline (100) of claim 2, wherein the SRL further comprises:
e. a sensor adapted to determine at least one of (i) the direction of a user relative to the SRL and (ii) the azimuth angle between the SRL and the user.

10. The self-retracting lifeline (100) of claim 9, wherein the computing device is adapted to use the data obtained from the sensors (122) to calculate a position of a distal end of the lifeline (108).

11. The self-retracting lifeline (100) of claim 10, wherein the computing device is adapted to calculate a position of the distal end of the lifeline (108) on a continuous basis.

12. The self-retracting lifeline (100) of claim 11, wherein the computing device is adapted to compare a position of the distal end of the lifeline (108) to a map stored in memory, wherein the map represents a work area.

13. The self-retracting lifeline (100) of claim 12, wherein the SRL is adapted to issue an audible notification prior to or when the user approaches an unsafe condition based on the map.

14. A method of using a self-retracting lifeline (SRL) (100), according to claim 1, comprising the steps of:

(a) determining a length of lifeline (108) extended from the SRL; and
(b) emitting a notification that is proportional to that length.

15. The method of claim 14, wherein the notification is a sound.

16. The method of claim 14, wherein the notification is haptic or visual.

**Patentansprüche**

1. Eine selbstaufrollende Rettungsleine (SRL) (100), aufweisend:

a. eine Rettungsleine (108), die ein distales Ende für eine Verbindung mit einem Benutzer hat;

b. einen Sensor (122), der angepasst ist, um eine Länge der Rettungsleine zu bestimmen, die von der SRL ausgefahren ist;
c. eine Benachrichtigungsvorrichtung (120, 120A); und
d. eine Rechenvorrichtung, aufweisend einen Prozessor und einen Speicher, wobei der Speicher Anweisungen einschließt, die, wenn sie durch die Rechenvorrichtung ausgeführt werden, die Benachrichtigungsvorrichtung veranlassen, eine sensorische Benachrichtigung einer Intensität abzugeben, die mit der Länge der Rettungsleine korreliert ist, die von der SRL ausgefahren ist.

2. Die SRL (100) nach Anspruch 1, wobei die sensorische Benachrichtigung ein hörbarer Klang ist.

3. Die SRL (100) nach Anspruch 1, wobei die sensorische Benachrichtigung haptisch oder visuell ist.

4. Die SRL (100) nach Anspruch 1, wobei die Benachrichtigung von höherer Intensität ist, wenn eine längere Länge der Rettungsleine (108) aus der SRL ausgefahren ist, als wenn eine kürzere Länge der Rettungsleine aus der SRL ausgefahren ist.

5. Die selbstaufrollende Rettungsleine (100) nach Anspruch 1, wobei die SRL ferner aufweist:
e. einen Sensor, der angepasst ist, um mindestens eines von (i) der Richtung eines Benutzers relativ zu der SRL und (ii) dem Azimutwinkel zwischen der SRL und dem Benutzer zu bestimmen.

6. Die selbstaufrollende Rettungsleine nach Anspruch 1 oder 5, wobei die Rechenvorrichtung angepasst ist, um die Daten, die von den Sensoren (122) erhalten werden, zu verwenden, um eine Position eines distalen Endes der Rettungsleine (108) zu berechnen.

7. Die SRL (100) nach Anspruch 2, wobei der Klang von höherer Intensität ist, wenn eine längere Länge der Rettungsleine (108) aus der SRL ausgefahren ist, als wenn eine kürzere Länge der Rettungsleine aus der SRL ausgefahren ist.

8. Die SRL (100) nach Anspruch 2, wobei die Benachrichtigungsvorrichtung eine hörbare Benachrichtigungsvorrichtung ist und die hörbare Benachrichtigungsvorrichtung innerhalb eines Gehäuses (102) der SRL enthalten ist.

9. Die selbstaufrollende Rettungsleine (100) nach Anspruch 2, wobei die SRL ferner aufweist:
e. einen Sensor, der angepasst ist, um mindestens eines von (i) der Richtung eines Benutzers relativ zu der SRL und (ii) dem Azimutwinkel zwischen der SRL und dem Benutzer zu bestimmen.

**10.** Die selbstaufrollende Rettungsleine (100) nach Anspruch 9, wobei die Rechenvorrichtung angepasst ist, um die Daten, die von den Sensoren (122) erhalten werden, zu verwenden, um eine Position eines distalen Endes der Rettungsleine (108) zu berechnen.

**11.** Die selbstaufrollende Rettungsleine (100) nach Anspruch 10, wobei die Rechenvorrichtung angepasst ist, um eine Position des distalen Endes der Rettungsleine (108) kontinuierlich zu berechnen.

**12.** Die selbstaufrollende Rettungsleine (100) nach Anspruch 11, wobei die Rechenvorrichtung angepasst ist, um eine Position des distalen Endes der Rettungsleine (108) mit einer Karte, die in dem Speicher gespeichert ist, zu vergleichen, wobei die Karte einen Arbeitsbereich darstellt.

**13.** Die selbstaufrollende Rettungsleine (100) nach Anspruch 12, wobei die SRL angepasst ist, um eine hörbare Benachrichtigung auszugeben, bevor oder wenn sich der Benutzer einem unsicheren Zustand basierend auf der Karte nähert.

**14.** Ein Verfahren zum Verwenden einer selbstaufrollenden Rettungsleine (SRL) (100) nach Anspruch 1, aufweisend die Schritte:

(a) Bestimmen einer Länge der Rettungsleine (108), die von der SRL ausfährt; und
(b) Abgeben einer Benachrichtigung, die zu dieser Länge proportional ist.

**15.** Das Verfahren nach Anspruch 14, wobei die Benachrichtigung ein Klang ist.

**16.** Das Verfahren nach Anspruch 14, wobei die Benachrichtigung haptisch oder visuell ist.

**Revendications**

**1.** Cordage de sécurité auto-rétractable (SRL) (100) comprenant :

a. un cordage de sécurité (108) ayant une extrémité distale pour une liaison à un utilisateur ;
b. un capteur (122) adapté pour déterminer une longueur du cordage de sécurité qui est étendue à partir du SRL ;
c. un dispositif de notification (120, 120A) ; et
d. un dispositif informatique comprenant un processeur et une mémoire, la mémoire comportant des instructions qui, lorsqu'elles sont exécutées par le dispositif informatique, amènent le dispositif de notification à émettre une notification sensorielle d'une intensité qui est corrélée à la longueur du cordage de sécurité qui est étendue à partir du SRL.

**2.** SRL (100) selon la revendication 1, dans lequel la notification sensorielle est un son audible.

**3.** SRL (100) selon la revendication 1, dans lequel la notification sensorielle est haptique ou visuelle.

**4.** SRL (100) selon la revendication 1, dans lequel la notification est d'une intensité plus élevée lorsqu'une longueur plus longue de cordage de sécurité (108) est étendue à partir du SRL que lorsqu'une longueur plus courte de cordage de sécurité est étendue à partir du SRL.

**5.** Cordage de sécurité auto-rétractable (100) selon la revendication 1, dans lequel le SRL comprend en outre :
e. un capteur adapté pour déterminer au moins l'un parmi (i) la direction d'un utilisateur par rapport au SRL et (ii) l'angle d'azimut entre le SRL et l'utilisateur.

**6.** Cordage de sécurité auto-rétractable selon la revendication 1 ou la revendication 5, dans lequel le dispositif informatique est adapté pour utiliser les données obtenues à partir des capteurs (122) pour calculer une position d'une extrémité distale du cordage de sécurité (108).

**7.** SRL (100) selon la revendication 2, dans lequel le son est d'une intensité plus élevée lorsqu'une longueur plus longue du cordage de sécurité (108) est étendue à partir du SRL que lorsqu'une longueur plus courte de cordage de sécurité est étendue à partir du SRL.

**8.** SRL (100) selon la revendication 2, dans lequel le dispositif de notification est un dispositif de notification audible et le dispositif de notification audible est contenu dans un boîtier (102) du SRL.

**9.** Cordage de sécurité auto-rétractable (100) selon la revendication 2, dans lequel le SRL comprend en outre :
e. un capteur adapté pour déterminer au moins l'un parmi (i) la direction d'un utilisateur par rapport au SRL et (ii) l'angle d'azimut entre le SRL et l'utilisateur.

**10.** Cordage de sécurité auto-rétractable (100) selon la revendication 9, dans lequel le dispositif informatique est adapté pour utiliser les données obtenues à partir des capteurs (122) afin de calculer une position d'une extrémité distale du cordage de sécurité (108).

11. Cordage de sécurité auto-rétractable (100) selon la revendication 10, dans lequel le dispositif informatique est adapté pour calculer une position de l'extrémité distale du cordage de sécurité (108) sur une base continue.

12. Cordage de sécurité auto-rétractable (100) selon la revendication 11, dans lequel le dispositif informatique est adapté pour comparer une position de l'extrémité distale du cordage de sécurité (108) à une carte stockée en mémoire, dans lequel la carte représente une zone de travail.

13. Cordage de sécurité auto-rétractable (100) selon la revendication 12, dans lequel le SRL est conçu pour émettre une notification audible avant ou lorsque l'utilisateur s'approche d'une condition dangereuse sur la base de la carte.

14. Procédé d'utilisation d'un cordage de sécurité auto-rétractable (SRL) (100) selon la revendication 1, comprenant les étapes consistant à :

    (a) déterminer une longueur de cordage de sécurité (108) étendue à partir du SRL ; et
    b) émettre une notification qui est proportionnelle à cette longueur.

15. Procédé selon la revendication 14, dans lequel la notification est un son.

16. Procédé selon la revendication 14, dans lequel la notification est haptique ou visuel.

FIG. 1

R2

R1

110

108

122

100

106

FIG. 2

FIG. 3

FIG. 4

FIG. 5

FIG. 6

EP 3 969 128 B1

FIG. 7

FIG. 8

**FIG. 9**

**FIG. 10**

EP 3 969 128 B1

FIG. 11

FIG. 12

16

**EP 3 969 128 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018107169 A1